# FASCICULE DE BREVET EUROPEEN

(11) **EP 2 234 861 B1**
(45) Date de publication et mention de la délivrance du brevet: **05.06.2013**
(21) Numéro de dépôt: 09703778.2
(22) Date de dépôt: 12.01.2009
(51) Int. Cl.: B62D 1/10

(54) **AGENCEMENT POUR LE MONTAGE D'UN VOLANT SUR UNE COLONNE DE DIRECTION DE VEHICULE AUTOMOBILE**
ANORDNUNG ZUR MONTAGE EINES LENKRADES AUF DER LENKSÄULE EINES KRAFTFAHRZEUGS
ASSEMBLY FOR MOUNTING A STEERING WHEEL ON THE STEERING COLUMN OF AN AUTOMOBILE

(30) Priorité: 24.01.2008 FR 0850456
(43) Date de publication de la demande: 06.10.2010
(73) Titulaire: Renault s.a.s., 92100 Boulogne-Billancourt (FR)
(72) Inventeur: MENCARELLI, Franck, F-78610 Le Perray En Yvelines (FR)
(74) Mandataire: Rougemont, Bernard
(86) Numéro de dépôt international: PCT/FR2009/050039
(87) Numéro de publication internationale: WO 2009/092953

(56) Documents cités:
- EP-A- 0 782 950
- FR-A- 2 712 049
- US-A- 6 098 494

## Description

La présente invention concerne un agencement permettant de positionner angulairement et de solidariser rigidement un volant sur une colonne de direction.

L'invention trouve une application particulièrement avantageuse, mais non exclusive, dans le domaine automobile.

Pour fixer un volant sur une colonne de direction, il est connu d'utiliser une simple vis venant d'une part se loger dans un trou traversant ménagé au centre du moyeu dudit volant, et d'autre part se visser dans un taraudage usiné axialement à l'extrémité de ladite colonne de direction. Afin d'abaisser au maximum les coûts de production, c'est une vis de fixation standard qui est traditionnellement utilisée à l'échelle industrielle.

L'action de cette vis de fixation est généralement complétée par des cannelures qui sont plus particulièrement chargées de transmettre les efforts de rotation entre le volant et la colonne de direction. C'est ainsi qu'un premier jeu de cannelures est communément ménagé au niveau du trou traversant du volant, tandis qu'un second s'étend le long de la colonne de direction. L'ensemble est agencé de façon à s'emboîter longitudinalement lorsque le volant est inséré à l'extrémité de la colonne de direction.

Dans la pratique, les deux jeux de cannelures servent également à positionner angulairement le volant par rapport à la colonne de direction. La présence d'un système de détrompeur permet de définir une position de montage unique, dans laquelle le volant est parfaitement centré lorsque les roues directrices associées à la colonne de direction sont rigoureusement droites.

Ce type d'agencement présente toutefois l'inconvénient d'occasionner des difficultés de montage qui sont pour certaines susceptibles de nuire à la qualité d'assemblage, voire même de générer des détériorations.

En effet, de par son caractère standard, la vis de fixation présente une longueur qui est généralement supérieure à celle du trou ménagé à travers le moyeu du volant. Elle est par conséquent en mesure de venir se visser dans le taraudage de la colonne de direction, avant l'emboîtement longitudinal des deux jeux de cannelures.

En insistant quelque peu, ce qui s'avère relativement facile puisque le vissage est habituellement une opération mécanisée, il est possible de fixer le volant sans pour autant être correctement positionné d'un point de vue angulaire, et ce malgré la présence du système de détrompeur.

Ainsi donc et dans le meilleur des cas, le volant va devoir être remis en place ultérieurement au cours d'un fastidieux travail de retouche. Mais dans l'hypothèse la moins favorable, il va carrément être nécessaire de remplacer le volant suite à la dégradation de ses cannelures, étant donné que le moyeu est à l'heure actuelle généralement réalisé en magnésium.

Il est par ailleurs connu, par le document US 6,098,494, un assemblage entre un volant de véhicule automobile et une colonne de direction à l'extrémité de laquelle des premières cannelures sont agencées et se terminant par un axe fileté. Des secondes cannelures sont ménagées au niveau du volant et vouées à être emboîtées dans les premières cannelures. L'axe fileté coopère avec un écrou ménagé dans le volant et le serrage peut être effectué au moyen d'une vis sans fin coopérant avec l'écrou guidé en rotation lorsque les premières et secondes cannelures sont au moins partiellement emboîtées. Dans ce document, le taraudage est donc solidaire du volant tandis que le filetage est solidaire de l'arbre de direction. La solution inverse selon la préambule de la revendication 1 est également décrite.

Aussi, le problème technique à résoudre par l'objet de la présente invention, est de proposer un agencement pour le montage d'un volant sur une colonne de direction de véhicule automobile, ledit agencement comprenant d'une part des premières cannelures qui sont ménagées au niveau du volant et qui sont vouées à être emboîtées dans des secondes cannelures s'étendant le long de la colonne de direction, et d'autre part une vis de fixation qui est destinée à être engagée à travers le volant et à se visser dans un taraudage ménagé axialement à l'extrémité de la colonne de direction, à l'intérieur de cette dernière, si et seulement si les premières cannelures et les secondes cannelures sont au moins partiellement emboîtées, agencement qui permettrait d'éviter les problèmes de l'état de la technique en garantissant notamment un positionnement angulaire précis du volant, tout en garantissant le bon fonctionnement des cannelures pour différentes longueurs de vis.

La solution au problème technique posé consiste, selon la présente invention, à ménager un logement en amont du taraudage par rapport à l'extrémité de la colonne de direction.

Le principe consiste donc à n'autoriser la fixation du volant, que si ce dernier est préalablement positionné de façon adéquate à l'extrémité de la colonne de direction. L'ensemble est en effet agencé de manière à ce qu'il soit impossible de visser la vis de fixation dans le taraudage, tant que le volant n'est pas correctement orienté angulairement par rapport à la colonne de direction.

Cela signifie à contrario que si le volant est placé dans la seule position compatible avec le système de détrompeur, l'emboîtement longitudinal des cannelures va pouvoir s'opérer naturellement, validant ainsi l'étape de positionnement angulaire. Au fur et à mesure que le volant va être inséré à l'extrémité de la colonne de direction, la vis de fixation va progressivement se rapprocher du taraudage jusqu'à leur mise en contact effective. L'opération de vissage proprement dite peut alors commencer ; l'étape de fixation ne s'achevant qu'avec la mise en butée du volant contre la colonne de direction, et le serrage de la vis de fixation dans le taraudage.

Contrairement à ce qui se passe dans l'art antérieur, les étapes de positionnement angulaire et de fixation ne peuvent en aucun cas se dérouler de manière concomitante. L'agencement objet de l'invention impose un ordre de montage précis, dans lequel le calage angulaire du volant doit obligatoirement intervenir avant la mise en oeuvre de l'étape de fixation.

Quoi qu'il en soit, l'invention telle qu'ainsi définie présente l'avantage de garantir systématiquement un positionnement angulaire adéquat du volant. Cela permet d'éviter aussi bien les retouches que les rebuts, et donc au final de limiter les coûts de montage.

Il est par ailleurs important de préciser que l'invention est indépendante de la longueur de la vis, qui peut ainsi demeurer entièrement standard. C'est en fait le positionnement relatif entre la vis, le taraudage et les deux types de cannelures, qui est adapté afin que ladite vis ne puisse coopérer avec ledit taraudage qu'après emboîtement au moins partiel desdites cannelures, c'est-à-dire qu'après le positionnement angulaire du volant.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est une coupe axiale illustrant le montage d'un volant sur une colonne de direction de véhicule automobile.
La figure 2 constitue une vue similaire à la figure 1, mais une fois le montage achevé.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

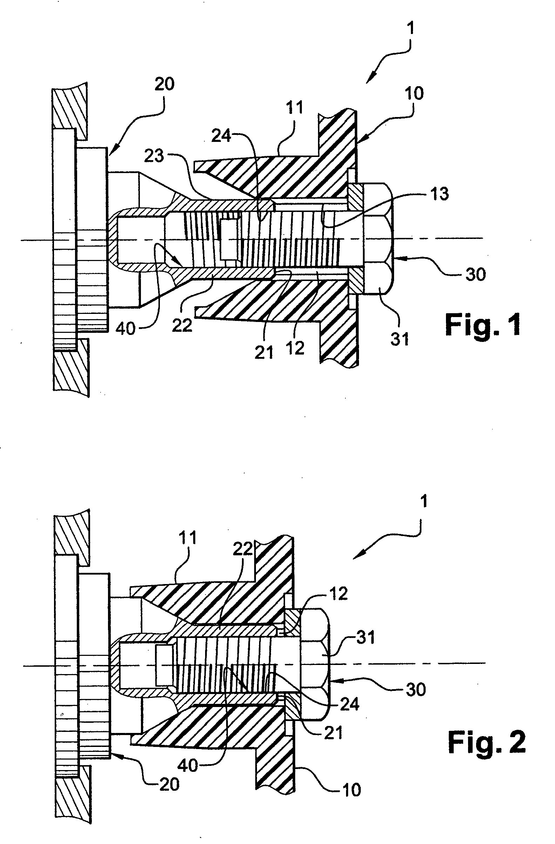

Les figures 1 et 2 font donc apparaître un agencement 1 qui permet à la fois de positionner angulairement, et de solidariser rigidement, un volant 10 sur une colonne de direction 20 de véhicule automobile. A cet égard, on remarque dès à présent que le volant 10 est concrètement destiné à être inséré à l'extrémité 21 de la colonne de direction **20.** C'est pourquoi il est doté d'un moyeu **11** au centre duquel est ménagé un trou traversant **12** dont la forme sensiblement complémentaire de celle de la portion **22** la plus distale de la colonne **20.**

En ce qui concerne plus particulièrement le positionnement angulaire du volant **10,** l'agencement **1** fait appel à un traditionnel système de cannelures complémentaires. Au niveau du volant **10,** on trouve ainsi une première série de cannelures **13** ménagées longitudinalement à l'intérieur du trou traversant **12,** tandis que sur la colonne de direction **20,** on note la présence d'une seconde série de cannelures **23** qui elles aussi sont disposées longitudinalement et s'étendent de façon radiale. Grâce à l'existence d'un détrompeur non visible ici, l'ensemble est agencé de manière à ce qu'il existe une unique position angulaire dans laquelle les premières cannelures **13** puissent s'emboîter longitudinalement dans les secondes cannelures **23** lors de l'insertion du volant **10** sur la colonne de direction **20.**

Pour ce qui est par contre de la solidarisation du volant 10 sur la colonne de direction **20,** l'agencement 1 prévoit une vis de fixation **30** qui est à même, d'une part, d'être engagée à travers le volant **10,** et d'autre part de coopérer avec un taraudage **40** ménagé axialement à l'extrémité **21** de ladite colonne **20.** Fort logiquement, c'est au niveau du trou traversant **12** que la vis de fixation **30** vient s'engager à travers le volant **10,** puisque c'est lui est chargé de recevoir la portion distale **22** de la colonne de direction **20 ;** la tête 31 de la vis 30 prenant alors appui contre la face avant du moyeu **11.**

Ainsi qu'on peut le voir notamment à la figure 1, et conformément à l'objet de la présente invention, une fois engagée à travers le volant **10,** la vis de fixation **30** est en mesure de se visser dans le taraudage **40** si et seulement si les premières cannelures **13** et les secondes cannelures **23** sont au moins partiellement emboîtées.

On comprend bien ici que ce n'est pas la simple présence combinée des premières cannelures **13,** des secondes cannelures **23,** de la vis de fixation **30** et du taraudage **40,** qui constitue l'invention ; une telle association étant parfaitement connue de l'état de la technique. Mais c'est la disposition relative entre ces différents éléments, les uns par rapport aux autres, qui permet de dissocier et d'ordonner dans le temps les étapes de positionnement angulaire et de fixation.

Il en résulte qu'une multitude de modes de réalisation sont possibles, en fonction de la taille des différents éléments et de leur implantation sur leurs supports respectifs. On pense notamment ici au fait que la vis de fixation **30** peut être plus longue ou plus courte que le trou traversant **12,** et/ou que le taraudage **40** peut être ménagé à une profondeur plus ou moins importante à l'intérieur de la colonne de direction **20,** et/ou que les secondes cannelures **23** peuvent être ménagées directement à proximité ou plus en retrait par rapport à l'extrémité **21** de la colonne de direction **20,** et/ou que les premières cannelures **13** peuvent être plus ou moins grandes.

Selon l'invention, l'agencement 1 comporte en outre un logement **24** qui est ménagé en amont du taraudage **40** par rapport à l'extrémité **21** de la colonne de direction **20.**

Cela signifie en d'autres termes que le taraudage **40** est ménagé à distance de l'extrémité **21** de la colonne de direction **20.** Cette caractéristique permet ici avant tout de compenser le fait que la vis de fixation **30** présente une longueur supérieure à celle du trou traversant **12.** Conformément à la figure 1, la profondeur du logement est fixée de telle sorte que le filetage de la vis **30** ne puisse atteindre celui du taraudage **40** tant que les premières cannelures 13 ne sont pas engagées dans les secondes cannelures **23.**

Selon une particularité de ce mode de réalisation, les secondes cannelures **23** s'étendent notamment au niveau de la portion de colonne de direction **20,** dans laquelle est ménagé le logement **24.**

Dans ce mode particulier de réalisation, choisi uniquement à titre d'exemple, le logement **24** est en fait un alésage qui est concentrique par rapport au taraudage **40,** et qui présente une section complémentaire de celle de la vis de fixation **30.**

Cette caractéristique permet avantageusement au logement **24** de remplir une fonction de guidage vis-à-vis de la partie filetée de la vis de fixation **30,** ce qui facilite d'autant la solidarisation du volant **10** à l'extrémité **21** de la colonne de direction **20.**

Selon une autre particularité de l'invention, les secondes cannelures **23** s'étendent en outre au niveau de la portion de colonne de direction **20,** à l'intérieur de laquelle est ménagé le taraudage **40.**

L'intérêt de cette caractéristique est de permettre aux secondes cannelures **23** de présenter une grande longueur. Il est ainsi possible de leur donner une taille comparable à celle des premières cannelures **13,** ce qui permet au final d'optimiser la transmission des efforts de rotation entre le volant **10** et la colonne de direction **20.**

Selon une autre particularité de l'invention, les premières cannelures 13 s'étendent sur sensiblement toute la longueur du trou traversant **12** du volant **10,** qui est destiné à recevoir la portion distale **22** de la colonne de direction **20.**

Là encore, l'objectif est de renforcer la liaison entre le volant **10** et la colonne de direction **20,** étant entendu que cela n'a de sens que si la longueur des premières cannelures **13** est sensiblement équivalente à celle des secondes cannelures **23.**

Bien évidemment, l'invention concerne plus généralement tout véhicule automobile doté d'une colonne de direction **20** manoeuvrable par l'intermédiaire d'un volant **10,** et disposant en outre d'un agencement **1** tel que précédemment décrit.

## Revendications

1. Agencement (1) pour le montage d'un volant (10) sur une colonne de direction (20) de véhicule automobile, ledit agencement (1) comprenant d'une part des premières cannelures (13) qui sont ménagées au niveau du volant (10) et qui sont vouées à être emboîtées dans des secondes cannelures (23) s'étendant le long de la colonne de direction (20), et d'autre part une vis de fixation (30) qui est destinée à être engagée à travers le volant (10) et à coopérer avec un taraudage (40) ménagé axialement à l'extrémité (21) de la colonne de direction (20), à l'intérieur de cette dernière, une fois engagée à travers le volant (10), la vis de fixation (30) pouvant se visser dans le taraudage (40) si et seulement si les premières cannelures (13) et les secondes cannelures (23) sont au moins partiellement emboîtées, ledit agencement étant **caractérisé en ce qu'**il comporte un logement (24) qui est ménagé en amont du taraudage (40) par rapport à l'extrémité (21) de la colonne de direction (20).

2. Agencement (1) selon la revendication 1, **caractérisé en ce que** les secondes cannelures (23) s'étendent au niveau de la portion de colonne de direction (20), dans laquelle est ménagé le logement (24).

3. Agencement (1) selon l'une des revendications 1 ou 2, **caractérisé en ce que** le logement (24) est un alésage qui est concentrique par rapport au taraudage (40), et qui présente une section complémentaire de celle de la vis de fixation (30).

4. Agencement (1) selon l'une quelconque des revendications 1 à 3, **caractérisé en ce que** les secondes cannelures (23) s'étendent au niveau de la portion de colonne de direction, dans laquelle est ménagé le taraudage (40).

5. Agencement (1) selon l'une quelconque des revendications 1 à 4, **caractérisé en ce que** les premières cannelures (13) s'étendent sur sensiblement toute la longueur d'un trou traversant (12) qui est ménagé au niveau du volant (10) afin de recevoir la colonne de direction (20).

6. Véhicule automobile doté d'une colonne de direction (20) manoeuvrable par l'intermédiaire d'un volant (10), **caractérisé en ce qu'**il comporte en outre un agencement (1) selon l'une quelconque des revendications précédentes.

## Patentansprüche

1. Anordnung (1) zur Montage eines Lenkrads (10) auf einer Lenksäule (20) eines Kraftfahrzeugs, wobei die Anordnung (1) einerseits eine erste Keilverzahnung (13), die am Lenkrad (10) ausgebildet ist und die dazu bestimmt ist, mit einer zweiten Keilverzahnung (23) in Eingriff gebracht zu werden, die entlang der Lenksäule (20) verläuft, und andererseits eine Befestigungsschraube (30) umfasst, die durch das Lenkrad (10) in Eingriff gebracht werden und mit einem Innengewinde (40) zusammenwirken soll, das axial am Ende (21) der Lenksäule (20) ausgebildet ist, in deren Innerem die Befestigungsschraube (30), sobald sie durch das Lenkrad (10) in Eingriff gebracht ist, in das Innengewinde (40) geschraubt werden kann, wenn und ausschließlich wenn die erste Keilverzahnung (13) und die zweite Keilverzahnung (23) zumindest teilweise ineinander in Eingriff gebracht worden sind, wobei die Anordnung **dadurch gekennzeichnet ist, dass** sie eine Aufnahme (24) umfasst, die bezüglich des Endes (21) der Lenksäule (20) vor dem Innengewinde (40) angeordnet ist.

2. Anordnung (1) nach Anspruch 1, **dadurch gekennzeichnet, dass** die zweite Keilverzahnung (23) an dem Abschnitt der Lenksäule (20) verläuft, in dem die Aufnahme (24) ausgebildet ist.

3. Anordnung (1) nach Anspruch 1 oder 2, **dadurch gekennzeichnet, dass** die Aufnahme (24) eine Bohrung ist, die bezüglich des Innengewindes (40) konzentrisch ist und die einen Querschnitt aufweist, der zu dem der Befestigungsschraube (30) komplementär ist.

4. Anordnung (1) nach einem der Ansprüche 1 bis 3, **dadurch gekennzeichnet, dass** die zweite Keilverzahnung (23) an dem Abschnitt der Lenksäule verläuft, in dem das Innengewinde (40) ausgebildet ist.

5. Anordnung (1) nach einem der Ansprüche 1 bis 4, **dadurch gekennzeichnet, dass** die erste Keilverzahnung (13) im Wesentlichen über die gesamte Länge eines Durchgangslochs (12) verläuft, das am Lenkrad (10) zur Aufnahme der Lenksäule (20) ausgebildet ist.

6. Kraftfahrzeug, das mit einer Lenksäule (20) ausgestattet ist, die mittels eines Lenkrads (10) betätigt werden kann, **dadurch gekennzeichnet, dass** es des Weiteren eine Anordnung (1) nach einem der vorhergehenden Ansprüche umfasst.

## Claims

1. Arrangement (1) for mounting a steering wheel (10) on a steering column (20) of a motor vehicle, said arrangement (1) comprising on the one hand first splines (13) that are made on the steering wheel (10) and that are intended to be fitted into second splines (23) extending along the steering column (20), and on the other hand, a fastening screw (30) that is designed to be engaged through the steering wheel (10) and to interact with a tapping (40) arranged axially at the end (21) of the steering column (20) on the inside of the latter, once engaged through the steering wheel (10), the fastening screw (30) being capable of being screwed into the tapping (40) if and only if the first splines (13) and the second splines (23) are at least partially engaged, said arrangement being **characterized in that** it comprises a housing (24) that is arranged upstream of the tapping (40) relative to the end (21) of the steering column (20) .

2. Arrangement (1) according to Claim 1, **characterized in that** the second splines (23) extend over the portion of steering column (20) in which the housing (24) is arranged.

3. Arrangement (1) according to one of Claims 1 or 2, **characterized in that** the housing (24) is a bore that is concentric with the tapping (40) and that has a section matching that of the fastening screw (30) .

4. Arrangement (1) according to any one of Claims 1 to 3, **characterized in that** the second splines (23) extend over the portion of steering column in which the tapping (40) is arranged.

5. Arrangement (1) according to any one of Claims 1 to 4, **characterized in that** the first splines (13) extend substantially over the whole length of a through hole (12) that is arranged on the steering wheel (10) in order to receive the steering column (20) .

6. Motor vehicle furnished with a steering column (20) that can be operated by means of a steering wheel (10), **characterized in that** it also comprises an arrangement (1) according to any one of the preceding claims.
